# EUROPEAN PATENT APPLICATION

(11) **EP 3 092 902 A1**
(43) Date of publication of application: **16.11.2016**
(21) Application number: 15425034.4
(22) Date of filing: 15.05.2015
(51) Int. Cl.: A22C 17/08, B08B 3/02

(54) **APPARATUS FOR CLEANING FOODSTUFFS, SUCH AS RAW HAM LEGS**

(71) Applicant: Colussi Ermes SRL, 33072 Casarsa Della Delizia (IT)
(72) Inventor: Colussi, Giovanni Battista, 33072 Casarsa Della Delizia (PN) (IT)
(74) Representative: Bonatto, Marco

(57) **Abstract**

The system (1) for washing dry-cured raw ham legs (7) according to the invention comprising A) a conveyor (3); B) a washing chamber (5) comprising a first (9) and a second casing portion (11); C) at least one washing nozzle (13) arranged to clean the pieces of food product (7) in the washing chamber (5) spraying them with a washing fluid. The first (9) and second casing portion (11) open and close the inlet opening (90, 110) approaching one another with a movement (F1) transverse to the ideal surface in which the perimeter of the inlet opening (90, 110) itself lies. The chamber (5) is cleaner than the known ones and reduces water consumption and the discharges of dirty sewages in the drain or sewer system.

## Description

### Field of the invention

The present invention regards a system or a machine for cleaning food products, particularly dry-cured raw ham legs of seasoning flare fat.

### State of the art

In some of its production steps dry-cured raw ham - "prosciutto crudo" in Italian language- requires washing. One of these is the step before removing the bones when removing the seasoning flare fat is required, i.e. "sugna" in Italian language, that is the fat and flour mixture which is spread on the cut area of the pig leg: apart from being unpleasant for the end consumer, the seasoning flare fat may house bacterial colonies, for example listeria.

In order to clean the ham thighs of seasoning flare fat, various types of automatic machines and systems were conceived. Among them systems are known in which the pig thighs, hanging on a continuous chain conveyor, travel across a washing chamber in which they are brushed and/or impacted by hot water jets; the washing chamber is closed by two slidable doors which open disappearing behind or within a fixed wall of the chamber itself.

The author of the present invention observed that the spaces between the slidable doors and the respective fixed walls are difficult to be reached by the hot washing water, and thus dirt continuously coming from the washing itself accumulates therein.

An object of the present invention is overcoming the aforementioned drawbacks of the state of the art and in particular provide a system or a machine for cleaning hams of seasoning flare fat which can be cleaned faster and more easily by the water for washing the hams with respect to the known systems, thus maintaining higher hygiene conditions over the time.

### Summary of the invention

In a first aspect of the present invention, this object is achieved with a system for washing food products having the features according to claim 1. Further features of the system are subject of the dependent claims.

In its second aspect, the invention relates to a measurement and washing system for food products, such as for example dry-cured raw ham legs, having the features according to claim 15.

In a particular embodiment, such measurement and washing system is arranged for:
- detecting the position up to which the end most proximal to the head of the femur of a ham leg moved by the conveyor extends;
- causing the washing nozzle, the brush, the spatula or the scraper to perform one or more travels, longitudinal to the detected ham leg and which comprises at least one section having length comprised between 4-10 decimetres measured starting from the end of the measured leg more proximal to the head of the femur.

In a particular embodiment, in such measurement and washing system the conveyor is arranged to move one or more dry-cured raw ham thighs holding them hanged thereto with the end of the trotter or the shank higher, and the head of the femur lower below, and the measurement system is arranged for:
- detecting the position up to which the lower end of a ham leg moved by the conveyor extends;
- according to the detections of the measurement system and the position of such lower end, determining and possibly varying the trajectory and/or the length of the travels that the at least one washing nozzle, brush, spatula or scraper carries out to clean such ham thigh.

In a particular embodiment, in such measurement and washing system the measurement system comprises one or more of the following elements: a photoemitter, a photoreceiver, a photocell, a feeler pin, a camera, an image processing system, an ultrasonic or another acoustic detector able of detecting either the position at least of one predetermined portion of the ham legs, and/or one or more characteristic dimensions thereof.

In a particular embodiment, in such measurement and washing system the measurement system comprises a row or a matrix of one or more of the following elements: a photoemitter, a photoreceiver, a photocell.

The advantages obtainable with the present invention shall be more apparent, to the man skilled in the art, from the following detailed description of a particular non-limiting embodiment, illustrated with reference to the following schematic figures.

### List of Figures

Figure 1 shows a first perspective view of a station for washing hams according to a particular embodiment of the invention, with the washing chamber open;
Figure 2 shows a lateral view of the station of Figure 1;
Figure 3 shows a second perspective view of the washing station of Figure 1;
Figure 4 shows a third perspective view of the washing station of Figure 1, in which the casing of the washing chamber is not represented;
Figure 5 shows a perspective view of a measuring station for systems for washing dry-cured raw hams or other food products, according to a particular embodiment of the invention;
Figure 6 shows a lateral view of the station of Figure 5.

### Detailed description

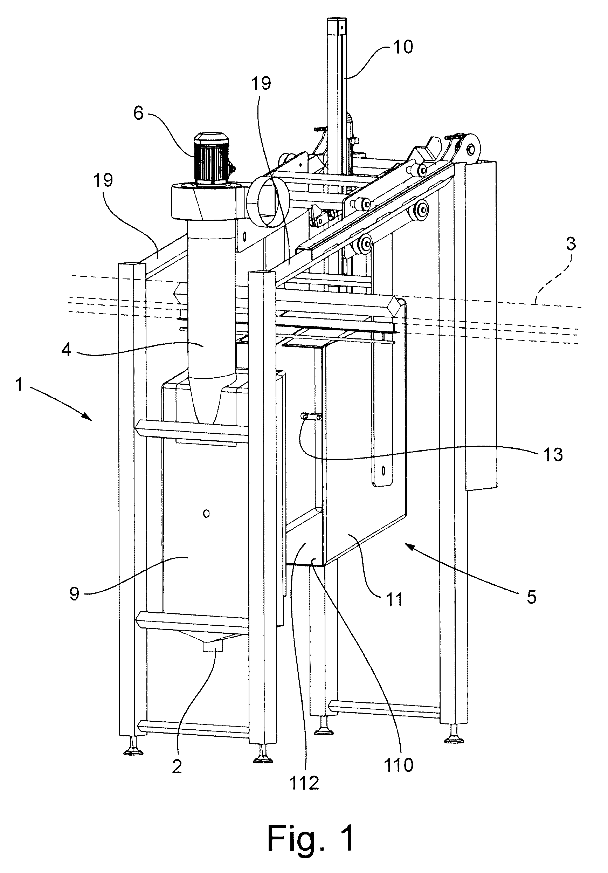

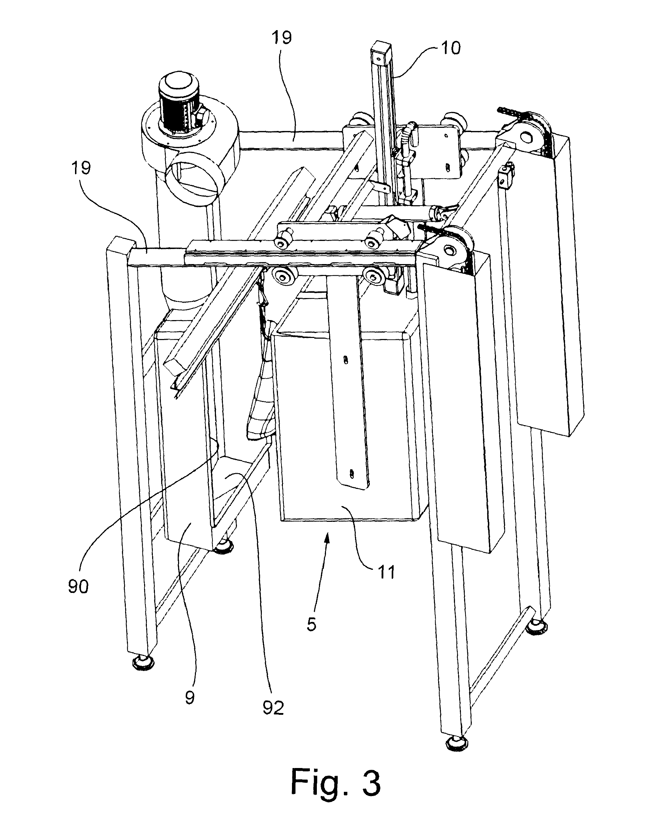

Figures 1-6 regard a system for washing food products, particularly for dry-cured raw ham legs, according to a particular embodiment of the invention and indicated with the overall reference 1. The system 1 comprises:
- a conveyor 3;
- a washing chamber 5 arranged to receive and enclose at least one piece of food product 7, such as for example a dry-cured raw ham thigh, moved by the conveyor 3, and comprising a first 9 and a second casing portion 11;
- at least one washing nozzle 13 arranged to clean the pieces of food product 7 in the washing chamber 5 spraying them with a washing fluid.

According to an aspect of the invention:
- at least one from among the first 9 and the second casing portion 11 form an opening, respectively 90 and 110;
- the opening 90 or 110 may be reversibly closed respectively by the second 11 or the first casing portion 9;
- the first 9 and the second casing portion 11 are arranged to open and close the inlet opening 90 and/or 110 approaching one another with a movement transverse to the ideal surface in which the perimeter of the inlet opening itself lies (arrow F1).

The conveyor 3 is preferably of the continuous type, and may be for example of the chain type or of the stepping pusher type. Advantageously the hams 7 are moved hanged on the conveyor 3, for example through a lace or cord slot 14 tightened on the ankle of the ham leg and hanged on suitable hooks 15, in turn fixed to the rest of the conveyor 3, or through a plastic lace inserted into the rear leg and tightened thereto. Preferably the conveyor 3 advances the hams or other food products with a stepping movement, so as to facilitate the stay of the ham in the chamber 5 during the washing and simplify the kinematics of the system.

Like in the represented embodiment, the perimeters of the inlet openings 90, 110 substantially lie in a plane. The first 9 and/or the second casing portion 11 may be substantially box-shaped - for example more or less parallelepiped-shaped - or half-shells, and for example they may be made of a welded sheet, preferably stainless steel sheet for hygiene purposes and resistance to water or other organic liquids. The washing unit 1 preferably comprises a bearing framework 17 which supports the first 9 and the second casing portion 11. For example like in the represented embodiment, the first casing portion 9 may be fixed and integral with the framework 17 while the second casing portion 11 may be mobile with respect thereto, for example due to the fact that it is mounted on sliding guides 19. In this case, the first 9 and the second casing portion 11 are arranged to open and close the inlet openings 90, 110 approaching one another with a translation according to a transverse and tilted direction F1 with respect to the ideal planes in which the perimeters of the inlet openings 90, 110 lie, i.e. obtaining a sort of closure like of approaching door leafs.

Like in the embodiment of the Figures 1-4 the sliding guides 19 and/or the internal bottom 92, 112 of the washing chamber 5 may be tilted with respect to the vertical. Advantageously the tilting of the guide 19 is oriented so as to tend to close the chamber by gravity, improving the sealing during the washing. The tilted internal bottom 92, 112 facilitates the collection and the drainage of the dirty washing liquid deposited thereon.

In another embodiment (not shown), the sliding guides 19 and/or the internal bottom 92, 112 of the washing chamber 5 may be substantially horizontal. In these cases the washing system 1 may be provided with suitable actuators, for example pneumatic, hydraulic or electrical actuators, arranged for actuating the first 9 and/or the second casing portion 11 so as to open and close the inlet opening 90, 110 and thus the washing chamber 5.

Preferably, when closed, the washing chamber 5 has a relatively small inner volume though such to be able to contain at least one complete ham leg - with or without the trotter - or possibly a smaller number thereof, for example up to eight legs. For this purpose, when closed, the washing chamber 5 has an inner volume preferably comprised between 70-3300 cubic decimetres, more preferably between 100-2000 cubic decimetres, even more preferably between 400-1000 cubic decimetres and for example comprised between 800-900 cubic decimetres, between 500-700 cubic decimetres or between 610-630 cubic decimetres.

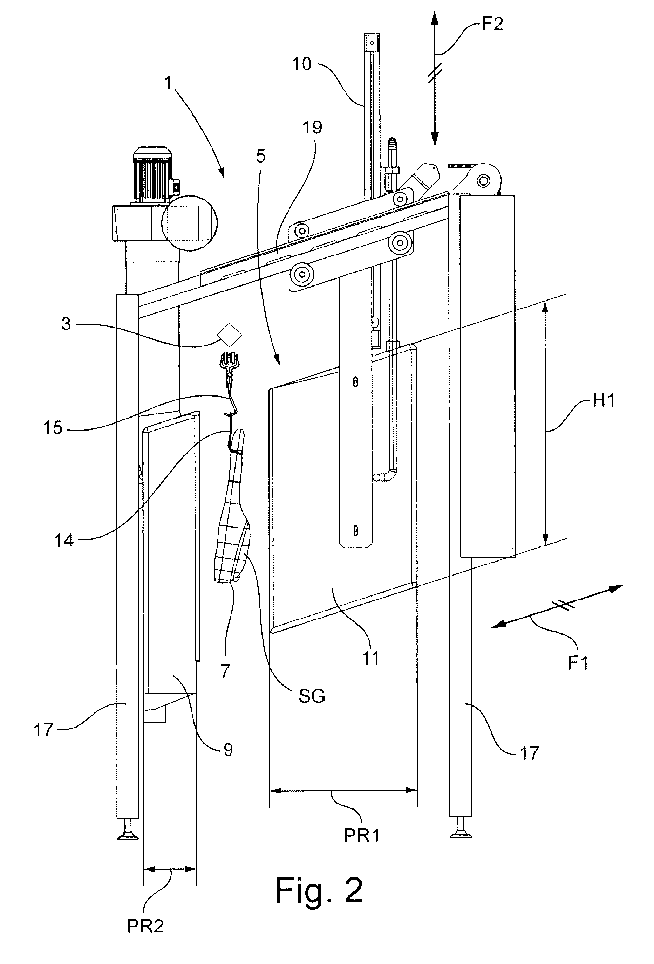

The washing chamber 5 when closed has:
- a maximum internal height H1 preferably comprised between 0.5-1.5 metres, and more preferably between 0.8-1.3 metres; and/or
- a maximum overall internal depth PR1 + PR2 preferably comprised between 0.3-1 metres, and more preferably between 0.5-0.8 metres, where PR1 and PR2 are the maximum internal depths respectively of the second 11 and of the first casing portion 9 (Figure 2).

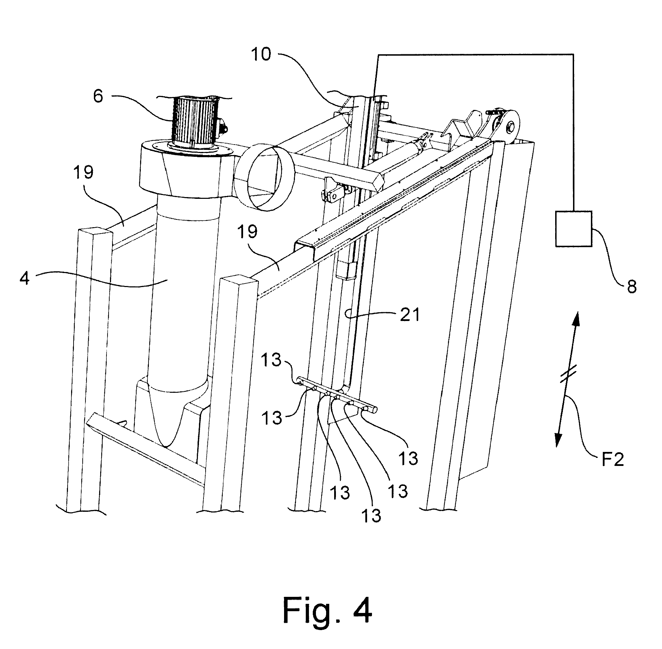

The at least one washing nozzle 13 is preferably located in the washing chamber 5 (Figure 1, 4). Preferably in the washing chamber 5, more nozzles 13 are situated. They may be supplied by a single distributor 21. Like in the shown embodiment, the washing nozzle or nozzles 13 are arranged for cleaning the ham legs of the seasoning flare fat SG which had been previously smeared on the cutting area of the thigh before seasoning.

Each nozzle 13 may be fixed and integral with respect to the distributor 21, or rotate or roto-translate with respect thereto by varying the inclination of the jets of the washing fluid which impact the ham to be washed.

For this purpose, the washing unit 1 may comprise a source 8 of a suitable washing fluid which supplies the washing nozzle or nozzles 13. Such washing fluid may be for example water with relatively high temperature, for example equal to or higher than 80-85°C, or an aqueous solution of suitable sanitising substances. Preferably the source of washing fluid 8, or however the washing nozzle or nozzles 13 are arranged to dispense the washing fluid at a pressure equivalent or greater than 5 relative bars with reference to the atmospheric pressure, more preferably equal to or higher than 10 bars, and even more preferably equal to or higher than 20 bars.

During the washing the atmosphere in the chamber 5 is saturated with vapour, aerosol, water sprays and seasoning flare fat residues and other dirt. Part of this atmosphere is deposited on the bottom 92, 112 of the chamber 5 in form of sewage, which may evacuated from the chamber through suitable draining ports 2 (Figure 1).

For evacuating more quickly the more volatile part of the vapours and the liquid or solid suspensions of the atmosphere of the chamber 5, the washing unit 1 is advantageously provided with a suctioning system comprising one or more suctioning ducts 4 and one or more fans 6 capable of creating a forced suctioning of the vapours and the solid and liquid particles in suspension in the atmosphere of the chamber 5. With a suitable dimensioning, the suctioning system may suction most of the suspensions quickly and when the chamber 5 is still closed so that, when it opens, it does not release its dirty content in suspension and vapours into the external environment, eliminating or in any case considerably reducing the dirtying and contamination of the adjacent areas of the processing system, and thus also reducing the risks of creating bacterial colonies.

Thanks to its closure movement approaching the door leaves the washing chamber 5 allows better cleaning of a system for processing hams or other food products. As a matter of fact, the two half-shells or other casing portions 9, 11 do not open and close concealably but remain constantly at sight, reduce an minimum the presence of recesses, interspaces and hidden areas difficult to reach in the chamber 5 by the washing fluid, or outside it with normal washing procedures (such as washing liquid jets, brushing operations or cleaning with sponges).
The relatively small inner volumes of the washing chamber considerably contributes to reducing the consumption of water or other washing fluid, as well as the amount of dirty sewages drained into the sewer or drain.

The position, the shape and the extension of the seasoning flare fat spot SG may vary considerably, also indicatively by a few decimetres or few centimetres passing from a type of dry-cured raw ham to another, for example from a San Daniele ham with trotter to a Parma ham without trotter. The position, the shape and the extension of the seasoning flare fat spot SG may also reveal considerable variations from one leg to the other in a batch of the same type, for example only San Daniele ham or only Parma ham.

A known system for treating, in a washing system, or other processing systems, hams of different type or considerably different size, for example San Daniele ham and Parma ham, or ham legs of considerably different size, consists of arranging multiple washing nozzles fixedly mounted on dispensers so that they extend on the largest seasoning flare fat spot that may be treated.

The author of the present invention noticed that in this manner the dispensers are over-dimensioned and thus consume much more water than actually required for treating most of the product passing in the system, or entire product batches, for example when it is necessary treating a batch Parma ham which, without the trotter, are generally shorter than the San Daniele hams. Most of the washing water is sprayed not where the piece of ham is found but in a gap, or in areas not covered with seasoning flare fat.

Thus, advantageously the washing system 1 is provided with a nozzle actuation system arranged to move the washing nozzle or nozzles 13 in the washing chamber 5 during the washing.

The actuation system is arranged to repeatedly lift and lower the washing nozzle or nozzles 13 in the washing chamber 5, for example performing a vertical travel, preferably a translation travel (arrow F2, Figure 4) or longitudinal to the leg to be cleaned, and for example it may comprise the sliding guide 23 and one or more actuators 10, such as for example a pneumatic or hydraulic cylinder, or a linear electrical motor (Figure 2). In the shown embodiment, the sliding guide 23 allows lifting and lowering the distributor 21 and the nozzles 13, for example vertically, in the chamber 5 during the washing.

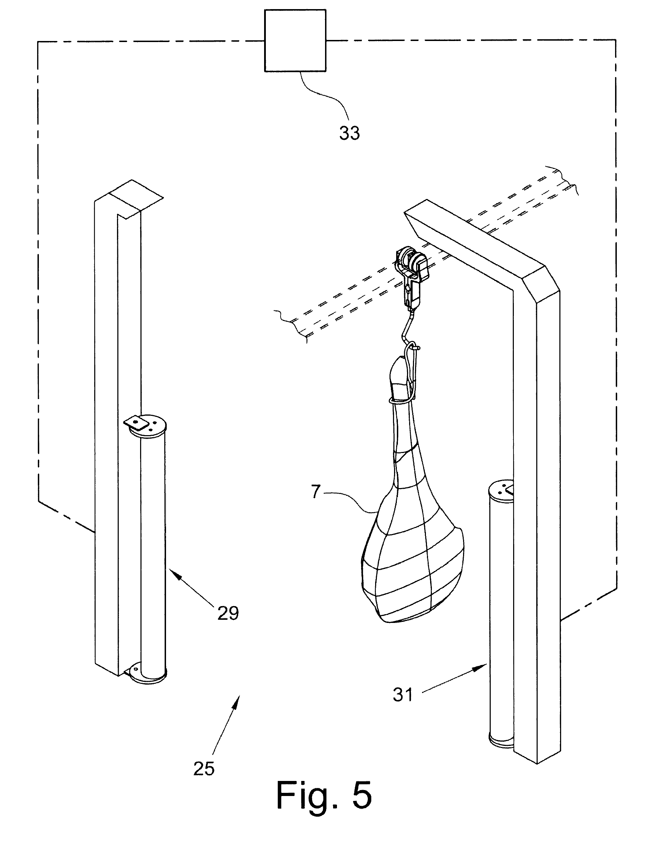

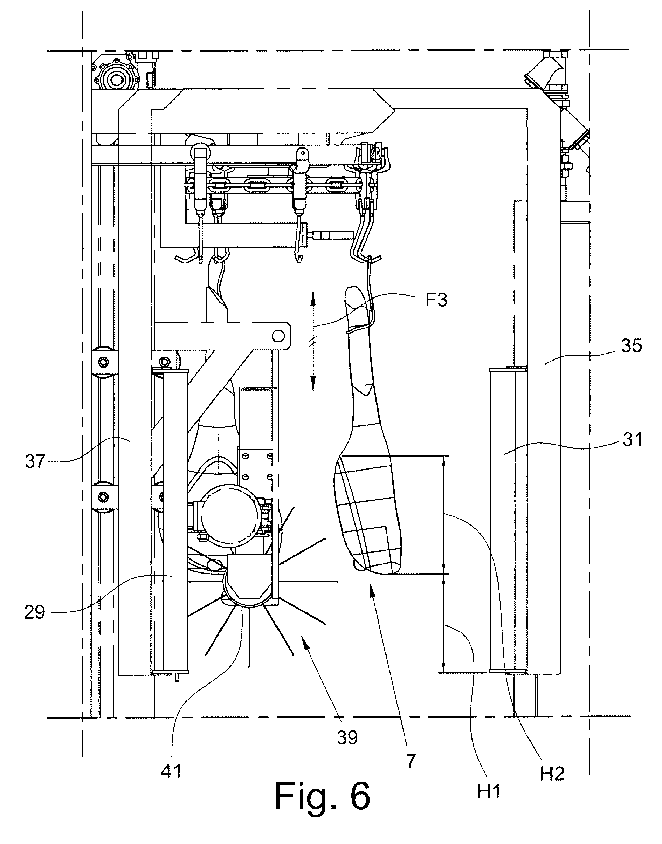

The washing unit 1 is also advantageously provided with a measurement system 25 arranged for:
- detecting the position and/or one or more dimensions of a ham thigh moved by the conveyor;
- according to the detections of the measurement system determine and possibly vary the trajectory and/or the length of the travels that the at least one washing nozzle 13 performs to spray such ham thigh (Figure 5, 6).

The measurement system 25 comprises one or more detectors 27 which may comprise one or more photocells, cameras and other image detectors, mechanical feeler pins, ultrasonic detectors or other acoustic detectors, a general presence sensors, detection and image analysis systems capable of detecting either the position of at least one predetermined portion of the ham legs, and/or one or more characteristic dimensions thereof.

In the embodiment of Figures 5, 6 the detectors 27 comprise a row -or array- of photoemitters 29, for example of LED having an emission spectrum in the window of the visible light or even only in the infrared, and a row -or array- of photoemitters 31 arranged for detecting the light radiation emitted by the photoemitters 29 and preferably for filtering and reducing or eliminating other foreign light emissions that would disturb the measurement. Such arrays may be mounted on bars arranged vertically and for example fixed on brackets or uprights 35, 37.

Clearly, the measurement system 25 may also comprise only one photoemitter 29 and only one photoreceiver 31, or a plurality of photoemitters 29 and photoreceivers 31 arranged as a matrix or more generally on several rows.

The one or more photoemitters 29 and the one or more photoreceivers 31 may be located on two opposite sides of the conveyor 3, so as to be able to detect the height H1 starting from which the ham 7 starts obscuring the radiation emitted by the emitters 29 preventing the photoreceivers 31 from receiving it.

The height H1 may for example refer to the lower end of the array of photoreceivers 29. Since the relative position between the conveyor 3 and the photoemitters 29-photodetectors 31 pair is fixed over the time, the length H2 of the travel F1 can be determined - for example through a suitable logic unit 33 and for example through statistical detections-that the distributor -or more generally the group - 21 of nozzles 13 needs to perform to spray the area covered by the seasoning flare fat of each ham without washing other too wide parts of the leg for no reason.

The aforementioned actuator (not shown) makes the nozzles 13 perform the travel thus determined. For example the nozzles 13 may be programmed to perform lifting and lowering travels having a length H2 comprised for example between 10-60 centimetres, between 10-50 centimetres, between 20-40 centimetres, between 20-45 centimetres or between 25-40 centimetres. The nozzles 13 may be programmed to perform travels of different length to clean the same piece of ham, for example a travel, or more generally few washing travels on the length of the entire piece of ham, and a larger number of travels of the aforementioned length H2 limited to the area covered by seasoning flare fat.

Thus, the measurement system 25 allows the nozzle 13 to concentrate the number of washing strokes made over the area of the seasoning flare fat, thus avoiding wasting the washing water elsewhere. For example each nozzle 13 may be programmed to perform at least one washing travel which extends on the entire length of the pieces of ham -for example with lengths comprised between 50-100 cm- and a larger number of washing travels -for example at least two - which extend only on the length H2 corresponding to the seasoning flare fat.

The washing strokes at the area only of the seasoning flare fat are preferably at least one more, more preferably at least two more, and even more preferably at least four more, than those extending on the entire length of the piece of ham. Similar criteria may be applied to the brushing travels of the rotary brushes 41 described hereinafter.

Like in the embodiment of Figures 5, 6 the measurement system 25 may be arranged for detecting the position, the extension or shape of the lower part of the ham legs, or more generally of the part proximal to the head of the femur. Clearly, other embodiments allow detecting the position, the extension or shape of other areas of the leg, for example closer to the shank.

Combined or alternatively to the washing station using water or another washing fluid 1, the ham treatment system may comprise a brushing unit 39 for example provided with one or more rotary brushes 41 around an axis for example horizontal, and one or more actuators, not shown, arranged to cause the brush or brushes 41 to perform suitable translation or roto-translation brushing travels, so as to preferably reach at least the entire area on which the seasoning flare fat was smeared.

Preferably such brushing travels are vertical translations, or more generally top-bottom translations. Advantageously the length of the brushing travels F3 is determined and actuated, analogously to the travel F2 of the nozzles 13, according to the detections of the measurement system 25. The wire-like elements of the brush or brushes 41 may for example be wires or metal strips or made of suitable plastic material. Still analogously to the travel F2 of the nozzles 13, the brush or brushes 41 may be programmed to perform travels of different length to clean the same piece of ham, for example a travel, or few brushing travels on the length of the entire piece of ham, and a larger number of travels F3 of the aforementioned length H2 limited to the area covered by seasoning flare fat.

The measurement station 25 is arranged upstream of the washing or brushing station 39, with reference to the flow of the ham moved through a system. The brushing station 39 is preferably arranged upstream of the washing station 1 so as to perform a first coarser cleaning of the seasoning flare fat. The fluid washing station 1 may instead remove the rests of seasoning flare fat not eliminated by brushing, performing a second more thorough and refined cleaning operation.

The previously described measurement and actuation system 25 considerably contributes to reducing the consumption of the washing liquid of the system for processing ham or other food products, as well as considerably increasing the washing efficiency. Due to the greater efficiency, the author of the invention observed the reduction of washing water consumption by about 20%, clearly considering the same amount of washed ham.

Advantageously the brushing station 39 is arranged to dry-brush the hams, i.e. without simultaneously spraying them with water or other washing liquids. Thus, the station 39 is able to dry-eliminate most of the seasoning flare fat, indicatively 80% of the produced seasoning flare fat; this seasoning flare fat may be gathered in a carriage, container or casing and evacuated as solid waste.

The washing chamber 5 should thus discharge the dirty water containing only a few rests of seasoning flare fat attached to the ham, indicatively 20% of the daily production, into the sewage. The succession of a dry brushing station 39 and a subsequent water washing station allows completely cleaning the ham considerably reducing the pollution of the disposal water.

The previously described embodiments are susceptible to various modifications and variants without departing from the scope of protection of the present invention. For example the first 9 and/or the second casing portion 11 are arranged to open and close the inlet openings 90 and/or 110 approaching one another with a translation according to a direction F1 perpendicular to the ideal surfaces in which the perimeter of the inlet opening 90 and/or 110 lies. The first 9 and the second casing portion 11 may be arranged to open and close their inlet openings 90 and/or 110 approaching one another with a rotation or roto-translation instead of through a simple translation.

The measurement system 25 may also be installed in systems for processing dry-cured raw hams or other types of food products, even without the washing unit 1. The washing nozzle or nozzles 13, or possible brushes, spatula or scrapers may clean the ham thighs of seasoning flare fat not only with vertical or longitudinal travels but also transverse travels with respect to the ham legs.

In addition, all details can be replaced with technically equivalent elements. For example the materials used, as well as the dimensions, may vary according to the technical needs. It should be observed that expressions like "A *comprises* B, C, D" or "A *is formed by* B, C, D" also comprise and describe the particular case where "A *is constituted by* B, C, D". The examples and lists of possible variants of the present application shall be deemed to be non-exhaustive lists.

## Claims

1. System (1) for washing food products, such as for example dry-cured raw ham legs (7), comprising:
- a conveyor (3);
- a washing chamber (5) arranged to receive and enclose at least one piece of food product such as for example a dry-cured raw ham thigh (7), moved by the conveyor (3), and comprising a first (9) and a second casing portion (11);
- at least one washing nozzle (13) arranged to clean the pieces of food product (7) in the washing chamber (5) spraying them with a washing fluid;
and wherein:
- at least one from among the first (9) and the second casing portion (11) form an inlet opening (90, 110);
- the inlet opening (90, 110) may be reversibly closed respectively by the second (11) or the first casing portion (9);
- the first (9) and the second casing portion (11) are arranged to open and close the inlet opening (90, 110) approaching one another with a movement (F1) transverse to the ideal surface in which the perimeter of the inlet opening itself (90, 110) lies.

2. System according to claim 1, wherein the first (9) and the second casing portion (11) are arranged to open and close the inlet opening (90, 110) approaching one another with a translation according to a direction (F1) transverse to the ideal surface in which the perimeter of the inlet opening itself lies.

3. System according to claim 1, wherein the first (9) and the second casing portion (11) are arranged to open and close the inlet opening (90, 110) approaching one another with a rotation or roto-translation.

4. System according to claim 1, wherein the washing chamber (5) when closed has an inner volume comprised between 70-3300 cubic decimetres.

5. System according to claim 1, wherein during the washing the at least one washing nozzle (13) is located in the washing chamber (5).

6. System according to claim 1, wherein the washing fluid is water-based or an aqueous solution, and the washing system (1) comprises a source of washing fluid (8) which supplies the at least one washing nozzle (13).

7. System according to claim 6, wherein the source of washing fluid (8) is arranged to supply the at least one washing nozzle (13) with water at a temperature equal to or higher than 75 Celsius degrees.

8. System according to claim 6, wherein the source of washing fluid (8) is arranged to supply the at least one washing nozzle (13) with water at a pressure equal to or higher than 5 relative bars.

9. System according to claim 1, wherein the at least one nozzle (13) is arranged to at least partly remove, from a ham thigh (7) enclosed in the washing chamber (5), a layer of seasoning flare fat which covers part of the thigh itself.

10. System according to claim 1, comprising a nozzle actuation system (10) arranged to move the at least one washing nozzle (13) in the washing chamber (5).

11. System according to claim 1, comprising a measurement system arranged for:
- detecting at least one from among the position or one or more dimensions of a ham thigh (7) moved by the conveyor;
- according to the detections of the measurement system determine and possibly vary the trajectory and/or the length (H2) of the travels that the at least one washing nozzle (13), brush (39), spatula or scraper performs to clean such ham thigh.

12. System according to claim 11, wherein the measurement system is arranged for:
- detecting the position up to which the end more proximal to the head of the femur of a ham leg (7) moved by the conveyor (3) extends;
- making the washing nozzle (13), the brush (39), spatula or the scraper perform one or more travels (F2), longitudinal to the detected ham leg and which comprise at least one section having length (H2) comprised between 10-60 centimetres measured starting from the end of the measured leg more proximal to the head of the femur.

13. System according to claim 11, wherein the conveyor (3) is arranged to move one or more dry-cured raw ham thighs (7) holding them hanged thereto with the end of the trotter or the shank higher, and the head of the femur lower below, and the measurement system is arranged for:
- detecting the position up to which the lower end of a ham leg (3) moved by the conveyor (3) extends;
- according to the detections of the measurement system and the position (H1) of such lower end, determining and possibly varying the trajectory and/or the length (H2) of the travels that the at least one washing nozzle (13), brush, spatula or scraper performs to clean such ham thigh (7).

14. System according to claim 11, wherein the measurement system comprises one or more of the following elements: a photoemitter (29), a photoreceiver(31), a photocell, a feeler pin, a camera, an image processing system, an ultrasonic or acoustic detector capable of detecting either the position at least of one predetermined portion of the ham legs, and/or one or more characteristic dimensions thereof; and/or comprises a row (29, 31) or a matrix of one or more of the following elements: a photoemitter, a photoreceiver, a photocell.

15. Measurement and washing system (1) for food products, such as for example dry-cured raw ham legs (7), comprising:
- a conveyor (3);
- a washing chamber (5) arranged to receive and enclose at least one piece of food product, such as for example a dry-cured raw ham thigh (7), moved by the conveyor (3) ;
- at least one washing nozzle (13) arranged to clean the pieces of food product (7) in the washing chamber (5) spraying them with a washing fluid;
- a nozzle actuation system (10) arranged to move the at least one washing nozzle (13) in the washing chamber (5) ;
- a measurement system arranged for:
- detecting at least one from among the position or one or more dimensions of a ham thigh (7) moved by the conveyor (3);
- according to the detections of the measurement system, determining and possibly varying the trajectory and/or the length (H2) of the travels that the at least one washing nozzle (13), brush (39), spatula or scraper performs to clean such ham thigh.
